Europäisches Patentamt

European Patent Office

Office européen des brevets

(19)

(11) Publication number: **0 074 946**
**B1**

## EUROPEAN PATENT SPECIFICATION

(45) Date of publication of patent specification: **07.09.88**

(51) Int. Cl.⁴: **B 67 D 5/30**

(21) Application number: **81901619.7**

(22) Date of filing: **24.03.81**

(86) International application number:
**PCT/US81/00380**

(87) International publication number:
**WO 82/03378 14.10.82 Gazette 82/25**

(54) PORTABLE LIQUID METERING DEVICE.

<table>
<tr><td>

(43) Date of publication of application:
**30.03.83 Bulletin 83/13**

(45) Publication of the grant of the patent:
**07.09.88 Bulletin 88/36**

(84) Designated Contracting States:
**AT CH DE FR GB LI LU NL SE**

(56) References cited:
**US-A-3 170 597**
**US-A-3 181 729**
**US-A-3 248 009**
**US-A-3 257 034**
**US-A-3 920 149**
**US-A-4 278 186**

**No relevant documents have been disclosed**

</td><td>

(73) Proprietor: **REILLY, David H.**
**508 Solar Drive Las Olas Isles**
**Fort Lauderdale, FL 33301 (US)**

(72) Inventor: **REILLY, David H.**
**508 Solar Drive Las Olas Isles**
**Fort Lauderdale, FL 33301 (US)**

(74) Representative: **Valentine, Francis Anthony Brinsley et al**
**REDDIE & GROSE 16 Theobalds Road London WC1X 8PL (GB)**

</td></tr>
</table>

Courier Press, Leamington Spa, England.

## Description

This invention relates to a portable liquid metering and dispensing device which can be inserted in an opening of a liquid container such as the neck of a bottle for example a bottle of liquor.

U.S.—A—3920149 discloses a beverage dispensing apparatus which includes a portable liquid metering and dispensing device comprising a housing having liquid pouring means at one end and an inlet at its other end for detachably securing the housing to an opening of a liquid container such as a liquor bottle, an air inlet path leading to the inlet, a liquid conduit leading from the inlet to the liquid pouring means, and means for blocking and unblocking the liquid conduit. When it is required to dispense a measured quantity from the container, an additional actuator is placed around the housing, the actuator including means responsive to tipping thereof for causing the blocking and unblocking means to unblock the liquid conduit for a predetermined period of time, and means for counting the number of operations of the unblocking means. Thus, with this known arrangement, two steps are required, for example in pouring out a measure of liquor, namely first placing the actuator over the housing and thereafter tipping the assembly to pour out the measure. The actuator then has to be removed from the container before the latter can be returned to its position on a rack.

In contrast, a portable liquid metering and dispensing device according to the invention is characterised in that the device is self-contained and the means responsive to tipping, the means for unblocking and blocking the conduit and the counting means are all disposed in the housing.

With such an arrangement, no additional steps are required when dispensing a metered quantity of liquid other than the usual steps of tipping the container to pour out the liquid.

An embodiment of the invention will now be described by way of example with reference to the accompanying drawings, in which:—

Fig. 1 is a perspective view of a device made in accordance with this invention inserted into the neck of a bottle.

Fig. 2 is a partial cross-sectional view.

Fig. 3 is an enlarged diagrammatic view of the motor and cam.

Fig. 4 is a block diagram of the invention.

Fig. 5 is a circuit diagram of the electrical aspects of the invention.

Referring now to the drawings the device illustrated comprises a housing 10 having an upper pour spout 10a and a flexible conduit 13 such as latex rubber tubing. Flexible conduit 13 is attached to a rigid conduit 14 which leads to an inlet 15 in a bottom means 19 for securing to a bottle. An air tube 16 having a check valve 16a extends through the inlet and housing to the outside air.

Within the housing is a motor 11 which drives a member 12, which member has a projection 12a normally pinching flexible conduit 13 in conjunction with spring 12a against rigid wall 12c. Upon proper actuation of the motor, projection 12a is removed thus permitting flow of liquid through the conduit. Further actuation of the motor causes projection 12a to pinch the conduit and block the flow of liquid in the conduit. An on/off switch 21 is provided as well as a knob 22 for adjusting the duration of time that the conduit is left open and hence in proportionate amount to the flow of liquid that is discharged from the bottle.

A logic circuit 100 is provided such as a micro processor circuit which acts so as to control the motor 11 in response to a tipping switch 24 which can for example, be a mercury switch or a sliding magnet switch 24a having a magnetic slug 24c engaging reed switch 24b. A DC source 20 such as a 9-volt battery powers the entire device and since the motor operates in short pulses to open and close the circuit pour valve 12, very little power is consumed. The logic circuit 100 has means for counting and displaying the number of times there are pairs of motor pulses and thus counts the number of times there is dispensing from the bottle, sometimes referred to as shot count 17. In addition the logic circuit provides for counting the number of times the device is removed from a bottle, hence the number of bottles with which the device has been used, display 18. Such information as shot count 17 and bottle count 18 are vital and important information for the control at bars where liquor is dispensed. In order to increase security further, the actual display of the stored information is not visible except when the user passes a magnet over a magnetic reed switch whereby the LED display becomes visible. A typical setting of the motor 11 is such that a pulse rotates the motor ten revolutions in one direction and after the time delay which can be varied by control 22, the motor is reversed in polarity to make ten revolutions in the reverse direction.

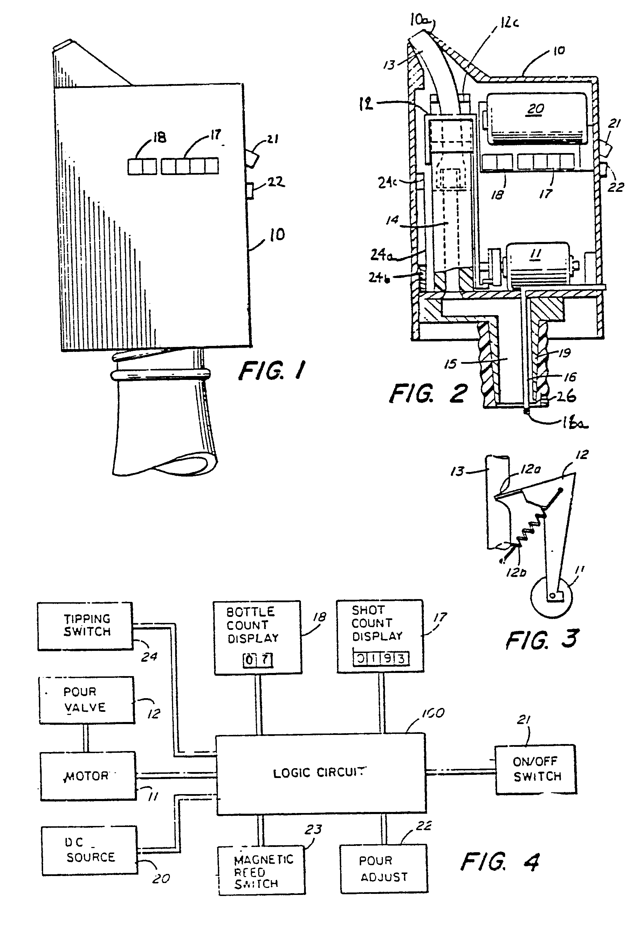

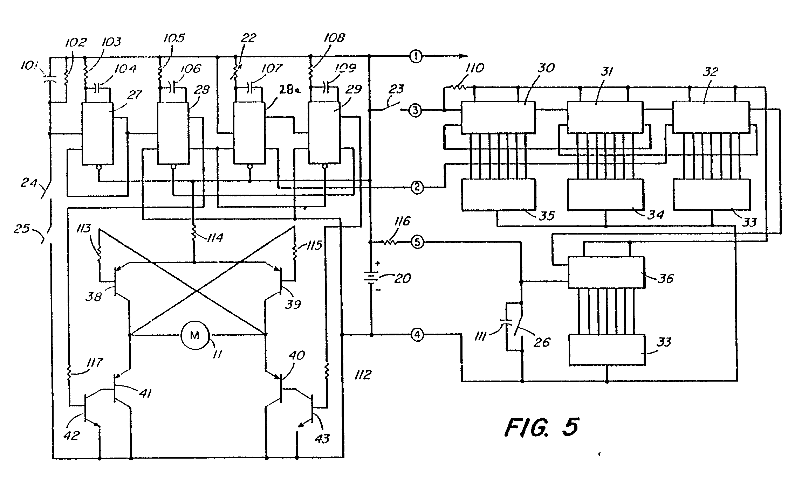

In the circuit exemplified in Fig. 5 the basic elements of the driving system are dual mono stable multi vibrators 27, 28, 28a, 29 (RCA COS/MOS Digital Integrated Circuits, high voltage B series RCA CD 3098B). The display elements 30, 31 and 32 actuate light-emitting diodes, 33, 34 and 35 so as to give the shot count display 17 while circuit 36 actuates light-emitting diode 33 for the bottle count 18. Resistor 103 and fixed capacitor .104 are associated with circuit 28a, and resistance 108 and capacitors 109 are associated with circuit 29.

The switching and power arrangement comprises battery 20 whose positive side is connected to switches as follows:

a) Through the noise filter comprising capacitor 101 and resistor 102 to tipping switch 24.

b) Through tipping switch 24 to shot count switch 25 which activates the motor 11 and its associated controls in accordance with signals from the microprocessor.

c) To bottle removal switch 26 which has noise filter capacitor 111 in series with resistance 116.

d) To magnetically activated reed switch 23 for activating the display section of the device.

The DC motor 11 is connected across transistors 38, 39, 40 and 43, which in conjunction with transistors 41 and 42 with resistances 112, 113, 114, 115 and 117 provide switching control for the motor from the microprocessor elements 27, 28, 28a and 29. Resistors 113 and 115 are base-limiting resistors for transistors 38 and 39. Resistors 112 and 117 are base-limiting for transistors 40 and 43. Transistors 41 and 42 act as level transition switches in going from the microprocessor elements 27, 28, 28a and 29 to the motor switches.

Components which can be used in the circuitry of this invention are commercially available; thus, ultra-miniature slide switches of the dual wipe type are available from UID. Fixed variable resistors are available from a number of different sources as are capacitors. Seven-segment light-emitting diodes are available from Monsanto. Integrated circuit components for the logic circuit are available from RCA and from Intersel, Inc. Counters and encoders are available from National Semi Conductor. Mercury switches are available from a number of sources including Gordos Corp. and reed switches are also obtainable from Gordos.

It should be noted that the embodiment illustrated and described herein requires no chamber for storage of liquid prior to dispensing. While the bottle with the dispensing device attached is in the normal upright position there is no liquid in the device. As soon as the device is tipped the conduit 13 is unblocked for a short period of time permitting instant pouring and each pour is automatically counted and the count is available for display. Adjustment of the pour size from for example one sixteenth to six ounces is accomplished by adjustment of the potentiometer 22 which adjusts the length of time that the conduit is unblocked. Since the entire logic and display circuit is contained within the device itself there is no need for auxilliary devices in order to keep an accurate control of the number of drinks that are served from a particular bottle or the number of bottles with which the device has been associated.

Another particular advantage of this embodiment is that the consumption of power is so low that the battery rarely needs changing. The preselected time delay during which the liquid is flowing out by gravity does not consume any power since the only time the motor is on is during the short pulses for blocking and unblocking.

The magnet slide switch illustrated in Fig. 2 whereby the switch is activated by the magnetic slug sliding by gravity to the magnetic reed switch can also be used to give a fast double pour by a slight shake which would unlatch the circuit and then permit the unblocking-blocking cycle to be repeated. It should be noted that the circuit is so arranged that reopening of the pour switch, be it the magnetic slide switch, or the mercury switch, is required before the unblocking-blocking cycle can be repeated.

While the illustrated embodiment is limited to metering, dispensing and counting a shot size which can be varied by adjustment of the potentiometer, it is also feasible although not illustrated, to have an additional microprocessor-display circuit which can be alternately used for preselected larger size volume. Thus for example, an additional switch will give the user the chance to deliver one ounce shots or two ounce shots.

In addition to having the shot counts and bottle removal counts stored in the portable device of this invention, such information could by state of the art techniques be transferred to another logic device which could monitor a large number of portable devices.

**Claims**

1. A portable liquid metering and dispensing device comprising a housing (10) having liquid pouring means (10a) at one end and an inlet (19) at its other end for detachably securing the housing to an opening of a liquid container, an air inlet path (16) leading to the inlet (19), a liquid conduit (13) leading from the inlet (19) to the liquid pouring means (10a), and means (11, 12) for blocking and unblocking the liquid conduit, the device further including means (24) responsive to tipping thereof for causing the blocking and unblocking means to unblock the liquid conduit for a predetermined period of time, and means for counting the number of operations of the unblocking means (11, 12), characterised in that the device is self contained and the means (24) responsive to tipping, the means (11, 12) for unblocking and blocking the conduit and the counting means are all disposed in the housing (10).

2. A device according to claim 1 characterised in that the conduit includes a flexible, resilient portion (13) and pinching means (11, 12) for selectively pinching the portion (13).

3. A device according to claim 1 or 2 characterised by means (17) for display of the count.

4. A device according to any of claims 1 to 3 characterised in that tipping responsive means is a mercury switch or switch operable by a sliding magnet (24b).

5. A device according to any of the preceding claims characterised by means (22) in the housing for varying the said predetermined time.

6. A device according to any of the preceding claims characterised by means (18) carried by the housing to count and display the number of times the device is removed from a liquid container.

7. A device according to any of the preceding claims characterised by means (18) for counting and displaying the number of times the device is removed from a liquid container.

8. A device according to claim 3 to 7, characterised by a magnetic switch (22) carried by the housing to cause the display or displays not to be visible except when the magnetic switch (22) is operated by an external magnet.

## Patentansprüche

1. Tragbare Meß- und Ausgabevorrichtung, aufweisend ein Gehäuse (10) mit einer Flüssigkeitsausgießeinrichtung (10a) an einem Ende und einem Einlaß (19) an seinem anderen Ende zum lösbaren Befestigen des Gehäuses an einer Öffnung eines Flüssigkeitsbehälters, einen zum Einlaß (19) führenden Lufteinlaßweg (16), einen vom Einlaß (19) zur Flüssigkeitsausgießeinrichtung (10a) führenden Flüssigkeitskanal (13) und eine Einrichtung (11, 12) zum Verriegeln und Entriegeln des Flüssigkeitskanals, welche Vorrichtung ferner eine Einrichtung (24) die auf ihr Kippen anspricht, um die Verriegelungs- und Entriegelungseinrichtung zu veranlassen, den Flüssigkeitskanal für eine vorbestimmte Zeitperiode zu entriegeln, und eine Einrichtung zum Zählen der Anzahl von Betätigungen der Entriegelungseinrichtung (11, 12) einschließt, dadurch gekennzeichnet, daß die Vorrichtung in sich abgeschlossen ist und die auf Kippen ansprechende Einrichtung (24), die Einrichtung (11, 12) zum Entriegeln und Verriegeln des Kanals und die Zähleinrichtung sämtlich im Gehäuse (10) angeordnet sind.

2. Vorrichtung nach Anspruch 1, dadurch gekennzeichnet, daß der Kanal einen flexiblen, elastischen Abschnitt (13) und eine Klemmeinrichtung (11, 12) zum selektiven Eindrücken des Bereichs (13) aufweist.

3. Vorrichtung nach Anspruch 1 oder 2, gekennzeichnet durch eine Einrichtung (17) zum Darstellen des Zählstands.

4. Vorrichtung nach einem der Ansprüche 1 bis 3, dadurch gekennzeichnet, daß die auf Kippen ansprechende Einrichtung ein Quecksilberschalter oder ein durch einen Gleitmagneten (24b) betätigter Schalter ist.

5. Vorrichtung nach einem der vorhergehenden Ansprüche, gekennzeichnet durch eine Einrichtung (22) im Gehäuse zum Variieren der vorbestimmten Zeit.

6. Vorrichtung nach einem der vorhergehenden Ansprüche, gekennzeichnet durch eine vom Gehäuse getragene Einrichtung (18) zum Zählen und Darstellen der Häufigkeit, mit der die Vorrichtung vom Flüssigkeitsbehälter entfernt worden ist.

7. Vorrichtung nach einem der vorhergehenden Ansprüche, gekennzeichnet durch eine Einrichtung (18) zum Zählen und Darstellen der Häufigkeit, mit der die Vorrichtung vom Flüssigkeitsbehälter entfernt worden ist.

8. Vorrichtung nach Anspruch 3 oder 7, gekennzeichnet durch einen vom Gehäuse getragenen Magnetschalter (22), um zu veranlassen, daß die Darstellung oder die Darstellungen außer, wenn der Magnetschalter (22) durch einen externen Magneten betätigt wird, nicht sichtbar ist bzw. sind.

## Revendications

1. Dispositif portable de dosage et de distribution d'un liquide comprenant un boîtier (10) équipé d'un moyen (10a) pour verser le liquide à une extrémité et une entrée (19) à son autre extrémité pour fixer de manière amovible le boîtier à une ouverture d'un conteneur de liquide, un trajet d'entrée d'air (16) conduisant à l'entrée (19), un conduit de liquide (13) conduisant de l'entrée (19) au moyen pour verser le liquide (10a), et un moyen (11, 12) pour bloquer et débloquer le conduit de liquide, le dispositif comprenant en outre un moyen (24) sensible à son basculement pour amener le moyen de blocage et de déblocage à débloquer le conduit de liquide pendant une période de temps prédéterminée, et un moyen pour compter le nombre d'opérations du moyen de déblocage (11, 12), caractérisé par le fait que le dispositif est autonome et par le fait que le moyen (24) sensible au basculement, le moyen (11, 12) pour débloquer et débloquer le conduit et le moyen de comptage sont tous disposés à l'intérieur du boîtier (10).

2. Dispositif selon la revendication 1, caractérisé par le fait que le conduit comprend une partie souple, élastique (13) et un moyen de pincement (11, 12) pour pincer la partie (13) de manière sélective.

3. Dispositif selon la revendication 1 ou 2, caractérisé par le fait qu'il comprend des moyens (17) d'affichage du compte.

4. Dispositif selon l'une quelconque des revendications 1 à 3, caractérisé par le fait que le moyen sensible au basculement est un commutateur à mercure ou un commutateur manoeuvrable par un aimant coulissant (24b).

5. Dispositif selon l'une quelconque des revendications précédentes, caractérisé par le fait que des moyens (22) sont prévus dans le boîtier pour faire varier ladite période prédéterminée.

6. Dispositif selon l'une quelconqus des revendications précédentes, caractérisé par le fait que des moyens (18) sont portés par le boîtier pour compter et afficher le nombre de fois où le dispositif est retiré d'un conteneur de liquide.

7. Dispositif selon l'une quelconque des revendications précédentes, caractérisé par le fait qu'il comprend des moyens (18) pour compter et afficher le nombre de fois où le dispositif est retiré d'un conteneur de liquide.

8. Dispositif selon l'une des revendications 3 ou 7, caractérisé par le fait qu'il comprend un commutateur à aimant (22) supporté par le boîtier pour rendre le ou les affichages non visibles sauf lorsque le commutateur magnétique (22) est actionné par un aimant extérieur.

**FIG. 1**

**FIG. 2**

**FIG. 3**

| TIPPING SWITCH | | BOTTLE COUNT DISPLAY | SHOT COUNT DISPLAY |
|---|---|---|---|

*24*

| POUR VALVE | *12* |
|---|---|

| MOTOR | *11* |
|---|---|

| DC SOURCE | *20* |
|---|---|

LOGIC CIRCUIT

*100*

| ON/OFF SWITCH | *21* |
|---|---|

*23*

| MAGNETIC REED SWITCH | POUR ADJUST | **FIG. 4** |
|---|---|---|

*22*

1

FIG. 5

0 074 946